Europäisches Patentamt

European Patent Office

Office européen des brevets

(19)

(11) Publication number: **0 265 003 B1**

## EUROPEAN PATENT SPECIFICATION

(12)

(45) Date of publication of patent specification: **07.08.91**   (51) Int. Cl.5: **A23D 7/00, A21D 10/04**

(21) Application number: **87201934.4**

(22) Date of filing: **09.10.87**

(54) **Water-in-oil emulsions with a reduced fat content, which are suitable for frying.**

(30) Priority: **13.10.86 GB 8624523**

(43) Date of publication of application:
**27.04.88 Bulletin 88/17**

(45) Publication of the grant of the patent:
**07.08.91 Bulletin 91/32**

(84) Designated Contracting States:
**AT BE CH DE ES FR GB GR IT LI NL SE**

(56) References cited:
**EP-A- 0 098 663**
**EP-A- 0 146 987**
**FR-A- 2 386 343**
**GB-A- 1 113 241**

(73) Proprietor: **UNILEVER NV**
**Burgemeester s'Jacobplein 1 P.O. Box 760**
**NL-3000 DK Rotterdam(NL)BE CH DE ES FR**
**GR IT LI NL SE AT**

Proprietor: **UNILEVER PLC**
**Unilever House Blackfriars P.O. Box 68**
**London EC4P 4BQ(GB)GB**

(72) Inventor: **Vermaas, Leo Frans**
**Lijsterlaan 160**
**NL-3145 VN Maassluis(NL)**
Inventor: **Woestenburg, Willem Jan**
**Prins Hendriklaan 49**
**NL-3135 ZA Vlaardingen(NL)**

(74) Representative: **Dries, Antonius Johannes Maria et al**
**Unilever N.V. Patent Division P.O. Box 137**
**NL-3130 AC Vlaardingen(NL)**

Rank Xerox (UK) Business Services

**Description**

The present invention relates to multifunctional, water-in-oil emulsions, particularly spreads with a reduced fat content.

By "multifunctional" emulsions we mean emulsions which can be used for different purposes, e.g. baking, spreading on bread and, last but not least, frying, particularly shallow frying.

By reduced fat content we mean a level of fat below that of conventional margarines, which contain about 80% fat, and particularly a level of fat ranging from 40-75% and ideally from 50-70% based on the weight of the emulsion.

Attempts have been made to produce low-calorie emulsions containing less than 80% fat which display a good performance with regard to baking, frying and spreading. So far, these attempts have failed, since the above-mentioned product properties are difficult to reconcile with each other.

The effects of reducing the level of fat to a percentage well below 80% can be summarized as follows:
With regard to baking, one observes a decrease in air-uptake in the batter, resulting in a lower specific volume (SV) of the baked products such as cakes.

As a result of the extra water present in the reduced-fat, w/o emulsions, the cakes become wet and soggy.

With regard to spreading, an increasing tendency of the emulsion to break and to release droplets of free moisture when spread is observed. This is usually associated with an undesirable coarse appearance of the spread emulsion.

When the w/o emulsion spread is used in the kitchen for shallow frying, more spattering is observed. Spattering results from an irregular evaporation of water when the emulsion is heated e.g. at 120-200°C (primary spattering) and when wet foodstuffs such as pieces of meat or fish are thrown into the pan (secondary spattering). Moreover, some thickening agents and gelling agents such as proteins, used for improving the physical stability and the organoleptic properties of spreads with a reduced fat content, tend to form a sediment adhering to the surface of the fried fat. Such skin can be formed on heating the emulsion spread at e.g. 120-200°C (primary skin) or after addition of water or an aqueous solution to the molten emulsion in the preparation of gravy (secondary skin).

Applicants have developed new w/o emulsions which alleviate the above drawbacks and meet the above desideratum of multifunctionality to a great extent.

The w/o emulsions according to the invention comprise:

(i) a fatty phase containing up to 75 wt.% of fat;

(ii) a thickened proteinaceous aqueous phase constituting at least 25% and preferably 25-50% by weight of the total emulsion and containing a thickening agent or a gelling agent consisting of a protein or a mixture of a protein and a polysaccharide; and

(iii) an emulsifier system comprising an emulsifier promoting the formation of a fat-continuous emulsion and a mixture of phosphatides containing phosphatidyl choline and phosphatidyl ethanolamine in a ratio ranging from 3:1 to 10:1.

The fat constituting preferably 50-70 wt.% of the emulsion preferably contains more than 10% crystallized fat and ideally 15-25 wt.% crystallized fat at the temperature at which creaming is allowed to take place in the preparation of baked goods such as cakes. The creaming temperature generally lies between 15 and 30°C and in most instances at about 20°C.

Useful fat blends preferably contain less than 6% solid fat at mouth temperature in order to avoid waxiness in the mouth, particularly when the emulsion is used as a spread on bread.

The fat phase of the emulsion may contain a vegetable fat or a fat of animal origin, including butterfat, or mixtures of vegetable and animal fats. The fats can be in their natural form or be hydrogenated, interesterified or fractionated. For each particular application the most appropriate fat blends can easily be found.

Suitable fats (or fat blends) have a plastic consistency over a fairly wide range of temperatures and generally contain up to 90% and preferably up to 70% of oils liquid at 10°C (substantially free from crystallized fat at said temperature, the remainder consisting of fats melting within a temperature range preferably varying from about 20°C to about 54°C. Good examples of fat blends are for instance:

| | | |
|---|---|---|
| 1. | Hydrogenated whale oil, having a melting point ranging from 44-46°C | 20% |
| | Hydrogenated whale oil, having a melting point of 34°C | 30% |
| | Coconut oil, having a melting point of 24°C | 30% |
| | Soybean oil | 20% |
| 2. | Hydrogenated palm oil, having a melting point of 42°C | 25% |
| | Palm oil, having a melting point of 37°C | 30% |
| | Hydrogenated groundnut oil, having a melting point of 34°C | 20% |
| | Soybean oil | 25% |
| 3. | Hydrogenated groundnut oil, having a melting point of 34°C | 70% |
| | Coconut oil, having a melting point of 34°C | 10% |
| | Soybean oil | 20% |
| 4. | Hydrogenated groundnut oil, having a melting point of 42°C | 30% |
| | Coconut oil, having a melting point of 24°C | 20% |
| | Palmkernel oil, having a melting point of 28°C | 20% |
| | Soybean oil | 30% |

5. 30% of an interesterified mixture consisting of 90% hydrogenated sunflower oil (melting point 44°C) and 10% palm oil stearin
70% sunflower oil.

The gelling/thickening agent preferably comprises gelatin or a mixture of gelatin and a milk protein such as buttermilk powder, whey powder, skimmilk powder and the like.

Milk proteins can be incorporated in the aqueous phase in an amount ranging from 0.1-10 wt.%. When milk protein is used to gel the aqueous phase, amounts higher than 5% and preferably between 6 and 10%, based on the emulsion, are useful.

Gelatin is used in an amount ranging from 0.1-6 wt.%, preferably from 0.5-2.5 wt.%, based on the total weight of the emulsion.

Polysaccharides which can be used as gelling/thickening agents preferably consist of natural, modified or cross-linked starches. Suitable starches are e.g. rice starch, millet starch, oat starch, buckwheat starch, yam starch, maize starch, waxy maize starch (native starch substantially free from amylase). Suitable modified starches or cross-linked starches are e.g. di-starch phosphate, di-starch adipate, acetylated di-starch adipate, hydroxypropyl di-starch phosphate and acetylated di-starch phosphate.

It is, of course, possible to add a minor amount of other polysaccharides well known in the art. It is, however, ideal to use starches in view of their compatibility with the ingredients used to produce baked products such as cakes.

The amount of starch to be incorporated in the emulsion preferably ranges from 0.5-3 wt.%.

The emulsifier system comprises a mixture of phosphatides as defined above, which, for instance, can be produced by extracting a suitable source of phosphatides, e.g. soybean lecithin, with a polar organic solvent, preferably aqueous alcohol, for instance as described in European patent application N° 0141442, GB 1 113 241 or GB 1 215 386, included herein by way of reference.

The alcohol-soluble fraction obtained by alcohol extraction of native soybean lecithin contains mainly phosphatidyl choline and phosphatidyl ethanolamine, in a ratio which exceeds 3:1 and preferably ranges from 5:1 to 9:1, and minor amounts of other phosphatides.

The presence of said alcohol-soluble extract of phosphatides contributes to inhibiting skin formation to a great extent. Appropriate amounts of said alcohol-soluble extract in dry form may range from 0.05-2 wt.%, based on the total emulsion, and preferably range from 0.1-0.8 wt.%.

Applicants have further found that salts, particularly alkali halides and ideally sodium chloride, enhance the effect achieved with the alcohol-soluble extract of phosphatides defined above.

The presence of salt appears to have a positive effect on the inhibition of skin formation, and particularly the secondary skin formation.

Appropriate amounts of salt may range from 0.1-3 wt.%, preferably from 0.5-2.5 wt.% (based on the total weight of the emulsion).

The emulsifier system further comprises emulsifiers which promote the stabilization of a fat-continuous system. Such emulsifiers are well known in the art. The preferred emulsifiers are fatty acid partial esters of glycerol or polyglycerol and ideally monoglycerides. Said emulsifiers can be present in saturated form, in unsaturated form or in partially unsaturated form. For the production of a multipurpose spread, an emulsifier system is used which comprises the phosphatide mixture defined above and saturated and unsaturated fatty acid partial esters of glycerol or polyglycerol, or partial esters of both glycerol and polyglycerol, wherein:

(a) the amount of unsaturated fatty acid ester ranges from 0.1-0.6 wt.%, preferably from 0.3-0.5 wt.%;

(b) the amount of saturated fatty acid ester ranges from 0.1-0.4 wt.%, preferably from 0.3-0.5 wt.%; and

(c) the ratio of saturated fatty acid ester to unsaturated fatty acid ester ranges from 0.2-1.8 and preferably from 0.3:1 to 1.3:1.

The emulsifier system preferably contains a mixture of a saturated monoglyceride and an unsaturated monoglyceride having an iodine value exceeding 30 and preferably ranging from 40-120. The fatty acids of the saturated emulsifier are saturated $C_{16}$-$C_{18}$ fatty acids. The fatty acids of the unsaturated (or partially unsaturated) emulsifiers preferably comprise from 56-100% unsaturated $C_{16}$-$C_{18}$ fatty acids.

The w/o emulsions with a reduced fat content according to the invention containing the preferred emulsifier system defined above are particularly suitable for frying and baking. They display a very good performance when used for producing bakery products, particularly cakes. The main properties measured for judging the performance of the emulsion are the cake volume, its softness and its crumb structure.

Another advantage of the w/o emulsions according to the invention lies in the fact that they can be used without any restriction in the conventional recipes, i.e. conventional recipes need not be adapted because of the use of an emulsion contributing to more water than usual in the batter used for producing the bakery product, for instance a cake. In other words, the emulsion can be used by the housewife or baker in the manufacture of baked goods as if it consisted of a conventional cake shortening or margarine.

Conventional home-made cakes are usually made by either first aerating the fat phase or by aerating the total cake batter and are often produced according to the "pound cake" recipe involving the use of equal parts of flour, sugar, eggs and fat (or emulsion) plus some baking powder and salt. When a reduced-fat emulsion (w/o), i.e. an emulsion containing more than 20% water, is used instead of fat or margarine, a cake of poor quality was obtained so far, either because of the excess of water introduced into the formulation or because of the reduced amount of fat. This would require an adaptation of the recipe, which is not an attractive proposition.

4

It was therefore a surprising observation that reduced-fat emulsions so far considered unsuitable fat ingredients for replacing margarine or shortening for baking could be used for that purpose.

Batters for bakery products, particularly cakes, are preferably prepared by mixing the emulsions according to the invention, e.g. in a Hobart mixer, with the amount of sugar prescribed in the cake recipe to produce a cream to which subsequently eggs or an egg substitute is added while mixing is continued, followed by the prescribed amount of flour and leavening agents, such as baking powder or yeast.

It is also possible to homogenize and aerate the emulsions according to the invention together with all the ingredients of the batter in one go.

Baking is generally carried out at about $160°C$ for about one hour. The quality of the cake is determined by measuring the specific volume (ml/g) according to standard procedures, e.g. by a wooden tray filled with millet seed (levelled). This tray is then partly emptied and the cake is put into it. The tray is now refilled to the brim with millet seed and levelled. The volume of remaining seed is determined by means of a measuring cylinder.

$$\text{S.V. cake} = \frac{\text{Volume millet seed (in cylinder)}}{\text{weight of the cake}}$$

An S.V. of 2.2 or lower is considered unacceptable to poor.

An S.V. of 2.3-2.4 is good.

An S.V. of 2.5 or higher is very good.

The softness of the cake crumb can be assessed by measuring the compressibility under standard conditions. The higher the compressibility, the firmer the cake.

The water content of the cakes can be measured by weighing cake crumb from the centre, before and after drying for 1 hour at $120°C$.

The structure of the baked products can be assessed by comparison of photographs of various cake crumbs and giving a score varying from very fine (1) to very coarse (8).

The bakery products obtained according to the invention are unique in that they contain less fat than normal.

The present invention also relates to reduced-fat spreads. Said spreads can be produced from the above-defined emulsions in a way known per se, e.g. in a Votator® apparatus, by applying cooling and working treatments.

The production of margarines and spreads is illustrated in "Margarine" by A.J.C. Andersen and P.N. Williams, Second Revised Edition, Pergamon Press, 1965, Chapter III.

The quality of the spreads produced according to the invention was tested as follows:

A broad palette knife (25 to 30 mm in width) was used to spread about 30 g of a sample backwards and forwards on greaseproof paper. During four to six spreading actions in each direction, the thickness of the spread should be reduced to about 2 to 3 mm. The appearance of the spread can then be given a score between 1 (good/smooth) and 5 (very poor/very rough and "broken").

In order to improve the spreading performance of the emulsions according to the invention, the use of sodium or calcium stearoyl lactylate turned out to be very beneficial. Preferred w/o emulsions according to the invention may further contain 0.1-0.5 wt.% stearoyl lactylate in the emulsifier system.

The multipurpose/multifunctional spreads according to the invention are useful products for shallow frying.

The frying behaviour is usually assessed by measuring the degree of spattering, formation of sediment and formation of a protein skin (primary and secondary skin as outlined above).

The spattering test involves heating 25 g of w/o emulsion (spread) in a heated glass dish kept at $205°C$, above which, at a height of 25 cm from the pan bottom, a sheet of paper is placed which catches the ejected fat.

The spattering pattern of the sheet is compared with a standard set of photographic patterns forming a scale ranging from 0 (very much spattering) to 10 (no spattering) to assess the spattering value.

The invention will now be illustrated in the following Examples I-XV.

The composition of the fat used in Examples I-VII was

| | |
|---|---|
| Soybean oil | 43% |
| Hydrogenated soybean oil, having a melting point of 36°C | 37% |
| Hydrogenated soybean oil, having a melting point of 41°C | 19% |
| Palm oil having a melting point of 58°C | 1% |

The fat solids content at 20°C was 24% and at 30°C 3%.

The emulsifier used in Examples I-VII was a saturated monoglyceride (Admul 6203).

Spreads were produced in a conventional way, as described in the "Margarine" reference mentioned above, by cooling and working treatments in a Votator® equipment.

Cakes were produced, starting from the following cake batter formulation:

| | Parts by weight |
|---|---|
| Flour | 100 |
| Emulsion | 100 |
| Sucrose (crystal sugar) | 100 |
| Egg | 100 |
| Salt | 2 |
| Baking powder | 2 |

The cakes were prepared as follows:

The emulsion was mixed (aerated) with the sugar for 10 minutes in a Hobart mixer to obtain a cream. The eggs were added slowly to the cream while stirring, and subsequently the flour was added while stirring for about 1 minute.

Baking was carried out at 160°C.

The structure of the cakes was light, with a slightly coarse crumb. The cakes were well cooked and had good organoleptic properties. On consumption, the cakes were not considered significantly less succulent than standard fat cake, i.e. a cake produced from 100 parts by weight of margarine instead of 100 parts of the emulsion.

The product performance with respect to frying behaviour is illustrated in Table I.

In Examples VIII-XV a basic formulation was used, having the following composition: 60% of a fat blend consisting of:

38% soybean oil,

54% of a mixture of hydrogenated rapeseed oils having a melting point ranging from 28-35°C, and

8% hydrogenated palm oil having a melting point of 44°C.

(The fat solids profile of the fat blend was: $N_{10}$ = 33; $N_{20}$ = 17; $N_{30}$ = 3; $N_{35}$ = 1.)

0.004% beta-carotene

0.3% alcohol-soluble mixture of phosphatides (mixture BF, cf.table 1)

0.9% sodium chloride

0.2% skimmilk powder

0.1% potassium sorbate

other ingredients as indicated in Table II up to 100% water acidified with lactic acid to pH 4.7-4.9.

All products of Examples VIII-XV had a good primary and secondary spattering behaviour and displayed no skin formation.

TABLE I

| Example | Fat (%) | Mono-glyceride* (%) | BZ (%) | BM (%) | BF (%) | Beta-carotene (%) | Water | NaCl (%) | SMP** (%) | Potassium sorbate (%) | Gelatin (%) |
|---|---|---|---|---|---|---|---|---|---|---|---|
| I | 59.35 | 0.2 | | | 0.2 | 0.15 | up to 100% | 2.0 | 0.3 | 0.1 | 1.0 |
| II | 59.35 | 0.2 | | | 0.3 | 0.15 | " " | 1.0 | 0.3 | 0.1 | 1.0 |
| III | 59.05 | 0.2 | | | 0.6 | 0.15 | " " | 0.5 | 0.3 | 0.1 | 1.5 |
| IV | 59.05 | 0.2 | | | 0.6 | 0.15 | " " | 1.0 | 0.3 | 0.1 | 1.0 |
| V | 59.45 | 0.2 | | | 0.2 | 0.15 | " " | 0.5 | 0.3 | 0.1 | 1.0 |
| VI (comp) | 59.15 | 0.2 | 0.5 | | | 0.15 | " " | 1.0 | 0.3 | 0.1 | 1.0 |
| VII (comp) | 59.45 | | | 0.2 | | 0.15 | " " | 1.0 | 0.3 | 0.1 | 1.0 |

Spattering: The primary spattering and secondary spattering of all samples were excellent.

Skin formation (primary and secondary) of emulsions of Examples I-IV completely inhibited.

Emulsion of Example V, containing a relatively small amount of salt, displayed some secondary skin formation.

Emulsion of Example VI, produced with a natural mixture of soy phosphatides (BZ), displayed a primary and secondary skin formation.

Emulsion of Example VII, produced with enzymatically hydrolysed soy phosphatide (BM), so-called lysolecithins, displayed flakes of sediment on the oil surface.


BF = phosphatides enriched in phosphatidyl ethanolamine.

* saturated monoglyceride.

** SMP: skimmilk powder.

## TABLE II

| Example | Thickener | Emulsifier | | Product performance | |
|---|---|---|---|---|---|
| | | | | Spreading | Cake S.V. |
| VIII | WMS (2.3%) | $H_s$ | (0.25%) | 2 | 2.4 |
| | | $H_u$ | (0.2%) | | |
| IX | WMS (2.0) | SSL | (0.2%) | 3 | 2.4 |
| | | $H_s$ | (0.25%) | | |
| | | $H_u$ | (0.2%) | | |
| X | gelatin (2.0%) | $H_s$ | (0.25%) | 2 | 2.4 |
| | | $H_u$ | (0.2%) | | |
| XI | gelatin (1.0%) | SSL | (0.2%) | 2 | 2.4 |
| | | $H_s$ | (0.25%) | | |
| | | $H_u$ | (0.2%) | | |
| XII | gelatin (1.0%) | $H_s$ | (0.2%) | 2 | 2.4 |
| | | $H_{u'}$ | (0.2%) | | |
| XIII | Snowflake (2.2%) | SSL | (0.2%) | 2 | 2.3 |
| | | $H_s$ | (0.2%) | | |
| | | $H_u$ | (0.2%) | | |
| XIV | gelatin (1.0%) | $PGE_1$ | (0.4%) | 2 | 2.0 |
| | | $PGE_2$ | (0.4%) | | |
| XV | WMS (2.0%) | $PGE_1$ | (0.4%) | 2 | 2.0 |
| | | $PGE_2$ | (0.4%) | | |

In Table II the following abbreviations are used:

WMS = waxy maize starch, a native starch which is substantially free from amylose.

$H_s$ = Hymono 8903, a monoglyceride (90%) with an iodine value below 3, derived from palm oil.

$H_u$ = Hymono 7704, a monoglyceride (90%) with an iodine value of 105, derived from sunflower oil (88% unsaturated fatty acids, 12% saturated fatty acids).

$H_{u'}$ = Hymono 4404, a monoglyceride (90%) with an iodine value of 45, derived from lard or tallow (44% saturated fatty acids, 56% unsaturated fatty acids).

SSL = sodium stearoyl lactylate.

PGE₁ = Admul PGE 1411, an unsaturated polyglycerol ester with an iodine value of 45, predominantly consisting of di-, tri- and tetraglycerol.

PGE₂ = Admul PGE 1414, a saturated polyglycerol ester with an iodine value of 3, predominantly consisting of di, tri- and tetraglycerol.

Snowflake = Snowflake type 5311, a modified corn starch (corn di-starch phosphate).

## Claims

1. Water-in-oil emulsion comprising:
   (i) a fatty phase containing up to 75 wt.% of a fat;
   (ii) a thickened, proteinaceous, aqueous phase constituting at least 25% by weight of the total emulsion and containing a thickening agent or a gelling agent consisting of a protein or a mixture of a protein and a polysaccharide; and
   (iii) an emulsifier system comprising an emulsifier promoting the formation of a fat-continuous emulsion and a mixture of phosphatides containing phosphatidyl choline and phosphatidyl ethanolamine in a ratio exceeding 3:1.

2. Water-in-oil emulsion according to claim 1, wherein the level of fat ranges from 50-70% by weight.

3. Water-in-oil emulsion according to claim 1, wherein the fat contains at least 10% and preferably 15-25 wt.% crystallized fat within the temperature range of 15-30° C.

4. Water-in-oil emulsion according to claim 1, wherein the gelling agent is gelatin, said gelatin being present in an amount ranging from 0.1-6 wt.%, preferably from 0.5-2.5 wt.% based on the total emulsion.

5. Water-in-oil emulsion according to claim 1, wherein the gelling agent consists of native starch, modified starch or cross-linked starch.

6. Water-in-oil emulsion according to claim 1, wherein the emulsifier system comprises one or more saturated and unsaturated fatty acid, partial esters of glycerol or a polyglycerol, or partial esters of both glycerol and polyglycerol, wherein
   (a) the amount of unsaturated fatty acid ester ranges from 0.1-0.6 wt.%, preferably from 0.3-0.5 wt.%,
   (b) the amount of saturated fatty acid ester ranges from 0.1-0.4 wt.%, preferably from 0.3-0.5 wt.%, and
   (c) the ratio of saturated fatty acid ester to unsaturated fatty acid ester ranges from 0.2-1.8.

7. Water-in-oil emulsion according to claim 1, wherein the mixture of phosphatides contains phosphatidyl choline and phosphatidyl ethanolamine in a ratio ranging from 5:1 to 9:1.

8. Water-in-oil emulsion according to claim 1, wherein the mixture of phosphatides is the alcohol-soluble fraction obtained by extraction of native soybean lecithin with aqueous alcohol.

9. Water-in-oil emulsion according to claim 1, wherein the amount of the mixture of phosphatides ranges from 0.05-2 wt.% based on the total emulsion.

10. Water-in-oil emulsion according to claim 1, wherein the emulsifier system further comprises sodium and/or calcium stearoyl lactylate.

11. Water-in-oil emulsion according to claim 1, wherein the aqueous phase contains 0.1-3 wt.%, preferably 0.5-2.5 wt.%, based on the total emulsion, of sodium chloride.

12. A process for producing batters for bakery products, which comprises using the emulsions according to any one of the claims 1-11 as a substitute for the margarine or shortening component of the recipe for said bakery products.

13. Bakery products produced from batters obtained from emulsions as claimed in any one of the claims 1-11.

**14.** Use of the emulsions claimed in any one of the claims 1-11 as a frying fat.

**Revendications**

1. Emulsion eau-dans-l'huile comportant :
   (i) une phase grasse renfermant jusqu'à 75 % en poids d'une matière grasse ;
   (ii) une phase aqueuse protéinique épaissie, constituant au moins 25 % en poids de l'émulsion totale et renfermant un agent épaississant ou un agent gélifiant constitué d'une protéine ou d'un mélange de protéine avec un polysaccharide ; et
   (iii) un système émulsifiant comportant un agent émulsifiant favorisant la formation d'une émulsion continue de matière grasse et un mélange de phosphatides renfermant de la phosphatidyl-choline et de la phosphatidyl-éthanolamine selon un rapport supérieur à 3:1.

2. Emulsion eau-dans-l'huile selon la revendication 1, dans laquelle le taux de matières grasses se situe dans la plage de 50 à 70 % en poids.

3. Emulsion eau-dans-l'huile selon la revendication 1, dans laquelle la matière grasse contient au moins 10 % et de préférence de 15 à 25 % en poids de matière grasse cristallisée à l'intérieur de la plage de température de 15 à 30° C.

4. Emulsion eau-dans-l'huile selon la revendication 1, dans laquelle l'agent gélifiant est de la gélatine, ladite gélatine étant présente en une quantité se situant dans la gamme de 0,1 à 6 % en poids, de préférence de 0,5 à 2,5 % en poids en se basant sur l'émulsion totale.

5. Emulsion eau-dans-l'huile selon la revendication 1, dans laquelle l'agent de gélification est constitué d'amidon naturel, d'amidon modifié ou d'amidon réticulé.

6. Emulsion eau-dans-l'huile selon la revendication 1, dans laquelle le système émulsifiant comporte un ou plus d'un acide gras saturé et insaturé, des esters partiels de glycérol ou d'un polyglycérol, ou bien des esters partiels à la fois du glycérol et du polyglycérol, dans lequel :
   (a) la quantité d'ester d'acide gras insaturé est dans la gamme de 0,1 à 0,6 % en poids, de préférence de 0,3 à 0,5 % en poids ;
   (b) la quantité d'ester d'acide gras saturé est dans la gamme de 0,1 à 0,4 % en poids, de préférence de 0,3 à 0,5 % en poids ; et
   (c) le rapport de l'ester d'acide gras saturé à l'ester d'acide gras insaturé est dans la gamme de 0,2 à 1,8.

7. Emulsion eau-dans-l'huile selon la revendication 1, dans laquelle le mélange de phosphatides contient de la phosphatidyl-choline et de la phosphatidyl-éthanolamine selon un rapport dans la gamme de 5:1 à 9:1.

8. Emulsion eau-dans-l'huile selon la revendication 1, dans laquelle le mélange de phosphatides est la fraction soluble dans l'alcool, obtenue par extraction de la lécithine naturelle de soja avec de l'alcool aqueux.

9. Emulsion eau-dans-l'huile selon la revendication 1, dans laquelle la quantité de mélange de phosphatides se situe dans la gamme de 0,05 à 2 % en poids, en se basant sur l'émulsion totale.

10. Emulsion eau-dans-l'huile selon la revendication 1, dans laquelle le système émulsifiant comporte en outre du stéaroyl lactylate de sodium et/ou de calcium.

11. Emulsion eau-dans-l'huile selon la revendication 1, dans laquelle la phase aqueuse renferme de 0,1 à 3 % en poids, de préférence 0,5 à 2,5 % en poids, en se basant sur l'émulsion totale de chlorure de sodium.

12. Un procédé pour préparer des pâtes à cuire ou produits de boulangerie, qui comprend l'utilisation des émulsions selon l'une quelconque des revendications 1 à 11, en tant qu'un succédané pour la margarine ou une graisse de cuisine entrant dans la recette desdits produits de boulangerie.

13. Produit de boulangerie préparé à partir des pâtes à cuire obtenues à partir des émulsions telles que revendiquées dans l'une quelconque des revendications 1 à 11.

14. Utilisation des émulsions revendiquées dans l'une quelconque des revendications 1 à 11 comme matières grasses pour fritures.

**Patentansprüche**

1. Wasser-in-Öl-Emulsion, umfassend
   (i) eine Fettphase mit bis zu 75 Gew.-% eines Fettes;
   (ii) eine eingedickte, proteinhaltige wäßrige Phase, die mindestens 25 Gew.-% der Gesamtemulsion ausmacht und ein Eindickungs- oder Geliermittel enthält, das aus einem Protein oder einer Mischung aus einem Protein und einem Polysaccharid besteht; und
   (iii) ein Emulgator-System, umfassend einen Emulgator, der die Bildung einer Emulsion mit einer kontinuierlichen Fettphase fördert, und ein Gemisch von Phosphatiden, das Phosphatidycholin und Phosphatidylethanolamin in einem Verhältnis über 3:1 enthält.

2. Wasser-in-Öl-Emulsion nach Anspruch 1, dadurch gekennzeichnet, daß der Fettanteil im Bereich von 50 bis 70 Gew.-% liegt.

3. Wasser-in-Öl-Emulsion nach Anspruch 1, dadurch gekennzeichnet, daß das Fett mindestens 10 Gew.-%, vorzugsweise 15 bis 25 Gew.-% eines im Temperaturbereich von 15 bis 30 °C kristallisierten Fettes enthält.

4. Wasser-in-Öl-Emulsion nach Anspruch 1, dadurch gekennzeichnet, daß das Geliermittel Gelatine ist, die in einer Menge von 0,1 bis 6 Gew.-%, vorzugsweise von 0,5 bis 2,5 Gew.-%, bezogen auf die Gesamtemulsion, vorliegt.

5. Wasser-in-Öl-Emulsion nach Anspruch 1, dadurch gekennzeichnet, daß das Geliermittel aus nativer, modifizierter oder vernetzter Stärke besteht.

6. Wasser-in-Öl-Emulsion nach Anspruch 1, dadurch gekennzeichnet, daß das Emulgator-System eine oder mehrere gesättigte und ungesättigte Fettsäuren, Partialester des Glycerins oder ein Polyglycerin oder Partialester sowohl von Glycerin als auch von Polyglycerin umfaßt, worin
   (a) der Anteil der ungesättigten Fettsäureester 0,1 bis 0,6 Gew.-%, vorzugsweise 0,3 bis 0,5 Gew.-%,
   (b) der Anteil der gesättigten Fettsäureester 0,1 bis 0,4 Gew.-%, vorzugsweise 0,3 bis 0,5 Gew.-%, ausmacht und
   (c) das Verhältnis der gesättigten Fettsäureester zu den ungesättigten Fettsäureestern im Bereich von 0,2 bis 1,8 liegt.

7. Wasser-in-Öl-Emulsion nach Anspruch 1, dadurch gekennzeichnet, daß das Gemisch der Phosphatide Phosphatidylcholin und Phosphatidylethanolamin in einem Verhältnis von 5:1 bis 9:1 enthält.

8. Wasser-in-Öl-Emulsion nach Anspruch 1, dadurch gekennzeichnet, daß das Gemisch der Phosphatide die bei der Extraktion von nativem Sojabohnenlecithin mit wäßrigem Alkohol erhaltene alkohollösliche Fraktion ist.

9. Wasser-in-Öl-Emulsion nach Anspruch 1, dadurch gekennzeichnet, daß der Anteil des Gemisches der Phosphatide im Bereich von 0,05 bis 2 Gew.-% der Gesamtemulsion liegt.

10. Wasser-in-Öl-Emulsion nach Anspruch 1, dadurch gekennzeichnet, daß das Emulgator-System weiterhin Natrium- und/oder Calciumstearyllactylat umfaßt.

11. Wasser-in-Öl-Emulsion nach Anspruch 1, dadurch gekennzeichnet, daß die wäßrige Phase 0,1 bis 3 Gew.-%, vorzugsweise 0,5 bis 2,5 Gew.-%, Natriumchlorid, bezogen auf die Gesamtemulsion, enthält.

12. Verfahren zur Herstellung eines Schlagteiges für Backprodukte, dadurch gekennzeichnet, daß die Emulsionen nach irgendeinem der Ansprüche 1 bis 11 als Ersatz für Margarine oder Shorteningskomponenten des Rezeptes für die Backprodukte verwendet werden.

13. Backprodukte, hergestellt aus Schlagteig, der unter Verwendung der Emulsionen nach irgendeinem der Ansprüche 1 bis 11 gewonnen wurde.

14. Verwendung der Emulsionen nach einem der Ansprüche 1 bis 11 als Bratfett.